# EUROPEAN PATENT SPECIFICATION

(11) **EP 1 016 777 B1**
(45) Date of publication and mention of the grant of the patent: **19.07.2006**
(21) Application number: 99850220.7
(22) Date of filing: 29.12.1999
(51) Int. Cl.: F01N 3/28, F01N 3/08

(54) **Catalytic purification device**
Vorrichtung zum katalytischen Entgiften
Dispositif de purification catalytique

(30) Priority: 30.12.1998 US 222975
(43) Date of publication of application: 05.07.2000
(73) Proprietor: AB VOLVO, 405 08 Göteborg (SE); Heed Consulting AB, 412 61 Göteborg (SE)
(72) Inventor: Jobson, Edward, 442 77 Romelanda (SE); Heed, Björn, 412 61 Göteborg (SE)
(74) Representative: Romare, Laila Anette

(56) References cited:
- EP-A- 0 661 098
- WO-A-96/04509
- US-A- 5 451 558
- US-A- 5 538 698

## Description

TECHNICAL FIELD: The present invention relates generally to a device for catalytic treatment of a gas flow.

BACKGROUND ART: Solvents and other organic compounds can be removed from air by oxidation or combustion. The impurities are made to react with oxygen in the air and they are thereby converted into harmless water and carbon dioxide. A high temperature is normally required for the reaction to proceed. Once the reaction has been initiated by ignition, however, the heat developed during the reaction is often sufficient to maintain a working temperature, provided the impurity concentration exceeds a lower explosive limit, but is below an upper explosive limit. For safety reasons, however, in most normal industrial processes care is taken to remain well below the explosive limit when air containing solvents or other combustible vapors are involved. This means that emissions of ventilating air containing impurities are virtually always below the explosive limit and usually far below. Under such circumstances, ignition is not sufficient to produce combustion of the impurities since the impurity content is too low for the reaction to proceed on its own. One way to achieve combustion despite a low impurity concentration is to heat the air to a temperature of 750-1000°C. This can be accomplished with electricity, or with the help of a gas or oil burner. This, however, drives up energy costs, even if heat exchangers are used to recover heat from the treated air for use in heating the incoming, but not yet treated air.

One way to reduce the reaction temperature, and thus energy consumption, is to let the reaction proceed with the help of catalysts. For example, contact with metals from the platinum group can provide a good reaction rate even at temperatures as low as 200°C or 300°C. Catalysts consisting of various blends of metal oxides may also be used. This field is quite large and new catalysts and ways of handling these catalysts to provide better catalytic activity are continuously being developed. However, temperatures well above room temperature are still normally needed in order to achieve a satisfactory reaction rate.

In WO 96/04509, a catalytic purification device is disclosed In which a preheating heat exchanger is an integrated part of the device. During operation of an automotive engine, the device according to WO 96/04509 provides heat economy by heat exchange between incoming and outgoing flows in the device. During an initial period of operation of the engine, however, the temperature of the exhaust gas is insufficient to start the catalytic reaction. Moreover, during this initial period the exhaust gas is rich in hydrocarbons which pass through the cold catalytic purification device substantially unaffected. In order to reduce the emissions of impurities during the cold-start period, a device according to WO 96/04509 is provided with a heating element which supplies heat to raise the temperature of the exhaust gas and start the catalytic reaction.

Another way to reduce the problem with cold-start emissions has been suggested in WO 96/21093. Accordingly, a preliminary catalytic reactor is provided in series with a hydrocarbon trap and a second catalytic reactor within a single canister. The hydrocarbon trap adsorbs hydrocarbons during the initial minutes of operation when the exhaust gas is below the ignition temperature of the catalyst. When the temperature rises, the hydrocarbons are released from the hydrocarbon trap and transferred to the second catalytic reactor. However, such a device has been found to be exceedingly bulky and cannot be used for applications where space is limited. Moreover, the device exhibits a large pressure-drop between the inlet and the outlet thereof.

Another example of a catalytic reactor provided in series with a hydrocarbon trap is given in EP661098, which is a conventional example of how to arrange an adsorbent structure in an exhaust gas treatment system comprising adsorbent material and catalytic material. EP661098 describes several different exhaust gas purification systems all including a downstream catalytic element and an adsorbent or adsorbent/catalytic body positioned on the upstream side of the downstream catalytic element. Preferably a second catalytic body should be positioned upstream of the adsorbent or adsorbent/catalytic body.

EP661098 thus constitutes a conventional modular building of exhaust gas purification systems making use of a combination of adsorbent/catalytic body or adsorbent body together with downstream possibly also upstream positioned catalysts. This modular increases the pressure drop over the arrangement. Further, the arrangement will suffer from having a rather early release of the adsorbed impurities since the adsorbent/desorbent body is arranged in an upstream position of the arrangement.

In view of the above described deficiencies associated with the use of known designs for devices for catalytic treatment of a gas flow, the present invention has been developed to alleviate these drawbacks and provide further benefits to the user. These enhancements and benefits are described in greater detail hereinbelow with respect to several alternative embodiments of the present invention.

### DISCLOSURE OF THE INVENTION:

The present invention in its several disclosed embodiments alleviates the drawbacks described above with respect to conventionally designed devices for catalytic treatment of gas flows and incorporates several additionally beneficial features.

One object of the present invention is to provide a catalytic purification device exhibiting low cold-start emissions. Another object of the present invention is to provide a catalytic purification device having a compact design and a low energy consumption. Still another object of the present invention is to provide a catalytic purification device wherein the pressure drop between the inlet and the outlet is low.

According to the present invention a device for catalytic treatment of a gas flow is provided as defined in claim 1.

In more general terms, the carrier walls in the carrier body act as membranes separating incoming gas from outgoing gas. The carrier walls are constructed such that heat can pass from the outgoing gas to the incoming gas as in an ordinary recuperative heat exchanger. Preferably, gas flow around the carrier walls is so arranged that heat exchange occurs in a so-called counter-current process in which the coldest part of the outgoing stream heats the incoming stream just as it is coming in, while the warmer, not yet cooled part of the outgoing stream heats the incoming stream at a later stage. This produces a high degree of heat exchange and good heating efficiency.

For efficient heat exchange, it is also important that the gas have good transfer contact with the surfaces of the carrier walls. Moreover, good contact between the gas flow and the carrier walls is advantageous in order to bring the gas stream into contact with the catalyst and the impurity-adsorbing/desorbing agent(s) which are coated onto the carrier walls. Hence, intimate contact between the carrier walls and the gas flow creates favorable conditions for achieving efficient purification of the gas flow.

In order to accomplish good contact with the carrier walls, flow paths are created between the carrier walls by providing at least one of the abutting carrier wall surfaces with a three-dimensional, raised pattern. Such a pattern acts as a spacing means between the carrier wall surfaces; the thus created space between the surfaces forming flow paths through the carrier body. A particularly preferred raised pattern is a pattern of parallel corrugations arranged at an angle to the inlet of the catalytic purification device.

Thus, the carrier walls have three main functions: separating an incoming gas flow from an outgoing gas flow; transferring heat between ingoing and outgoing gas flows; and carrying the catalyst and the adsorbing/desorbing agent, which are thus brought into intimate contact with a passing gas flow. In this context, the expression "gas" is taken to mean any gas or gas mixture, such as exhaust gas from a vehicle engine, containing impurities or other compounds which are advantageously removed by passing the gas through a catalytic purification device in accordance with the present invention.

The heat transferring membranes constituted by the carrier walls may be made of a thin metal sheet or foil, such as stainless steel, which is coated with a thin layer of catalyst and formed into a carrier body by folding or otherwise. The catalyst can be applied as an intermittent coating or can be applied as a continuous layer. The membrane may alternatively consist of a ceramic material impregnated or coated with a catalyst. The catalyst may be applied to only one side of the membranes, or to both sides thereof.

Further, an adsorption/desorption agent is applied to the carrier walls. The adsorption/desorption agent is a material which adsorbs impurities, usually hydrocarbons and nitrogen oxides (NOₓ), at a first, lower temperature and releases the impurities at a second, higher temperature. This implies that during an initial period of operation of the purification device, when the incoming gas has a low temperature, impurities will be trapped by the adsorption/desorption agent. The trapping takes place shortly after the incoming gas has entered through the inlet. After a while, when the temperature of the incoming gas has reached the desorption temperature for the adsorption/desorption agent, the impurities are released. Initially, the incoming gas will lose heat when traveling through the cold purification device upon start-up which implies that the impurities will again be adsorbed further downstream in the purification device. Eventually, all of the carrier body of the purification device will be heated and the released impurities will thus be brought into reactive contact with the catalyst. Preferably, the desorption temperature of the adsorption/desorption agent is at least as high as the ignition temperature of the catalyst. In this manner impurities will remain trapped until the temperature is sufficiently high to obtain a catalytic reaction resulting in a high degree of purification and low emissions during the cold-start period.

In a case where the temperature of the incoming gas is below the temperature required by the catalyst, not only during a cold-start period but during an extended period of operation, the heat-exchange function may nevertheless enable reaction in a heated part of the device. This part may be kept at a sufficient temperature, either by the reaction heat alone, or if this is insufficient, with additional heat supplied by an external heater.

The adsorption/desorption agent may comprise any adsorptive material conventionally used to adsorb hydrocarbons, such as activated alumina, porous glass, silica gel and activated carbon. A particularly useful class of materials are the zeolites, which are molecular sieves having a porous structure. The adsorption/desorption agent may be mixed with the catalyst or may be applied to the carrier walls in areas which are macroscopically separate from catalyst carrying areas. The type of adsorption/desorption agent is chosen with regard to the compounds which are to be removed from the treated gas flow. Two or more different adsorption/desorption agents may be mixed to achieve a trapping effect for several different kinds of compounds. In some instances, the same material can be used both as a catalyst and as an adsorption/desorption agent.

The technique of coating surfaces with thin and economical coatings of catalysts is well developed and used, for example, in the production of conventional automobile catalysts.

In addition to the oxidation of organic substances, the device is also suitable for other combined heat exchange and catalytic treatments of gases, for example for the selective reduction of nitrogen oxides (NOₓ) with ammonia or other reducing nitrogen compounds. The device is well suited to treating engine exhaust gases, whether they have high oxygen contents, (diesel engines) or low oxygen contents (Otto engines). This is particularly true when the temperature of the exhaust or the properties of the catalyst are such that satisfactory results cannot be achieved without heating.

The beneficial effects described above apply generally to the exemplary devices and mechanisms disclosed herein of the catalytic purification device. The specific structures through which these benefits are delivered will be described in detail hereinbelow.

### BRIEF DESCRIPTION OF THE DRAWINGS:

The invention will now be described in greater detail in the following way of example only and with reference to the attached drawings, in which:
Figure 1 is a perspective view showing one means of the assembly of a catalytic purification device in accordance with the present invention;
Figure 2 shows the catalytic purification device of Fig. 1, with the directions of gas flow in the device indicated by arrows;
Figure 3 shows juxtaposed layers of heat exchange carrier material;
Figures 4a-4e are schematic views of different placements of the inlet and the outlet in a catalytic purification device in accordance with the invention; and
Figure 5 shows a partial view of a carrier strip bundle in accordance with the present invention.

### MODE(S) FOR CARRYING OUT THE INVENTION:

As required, detailed embodiments of the present invention are disclosed herein; however, it is to be understood that the disclosed embodiments are merely exemplary of the invention that may be embodied in various and alternative forms. The figures are not necessarily to scale, some features may be exaggerated or minimized to show details of particular components. Therefore, specific structural and functional details disclosed herein are not to be interpreted as limiting, but merely as a basis for the claims and as a representative basis for teaching one skilled in the art to variously employ the present invention.

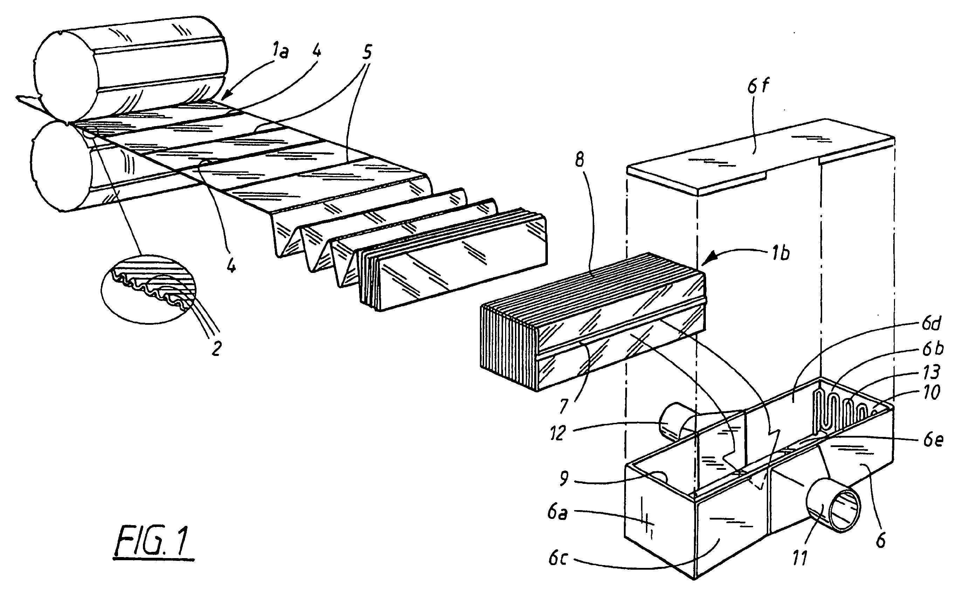

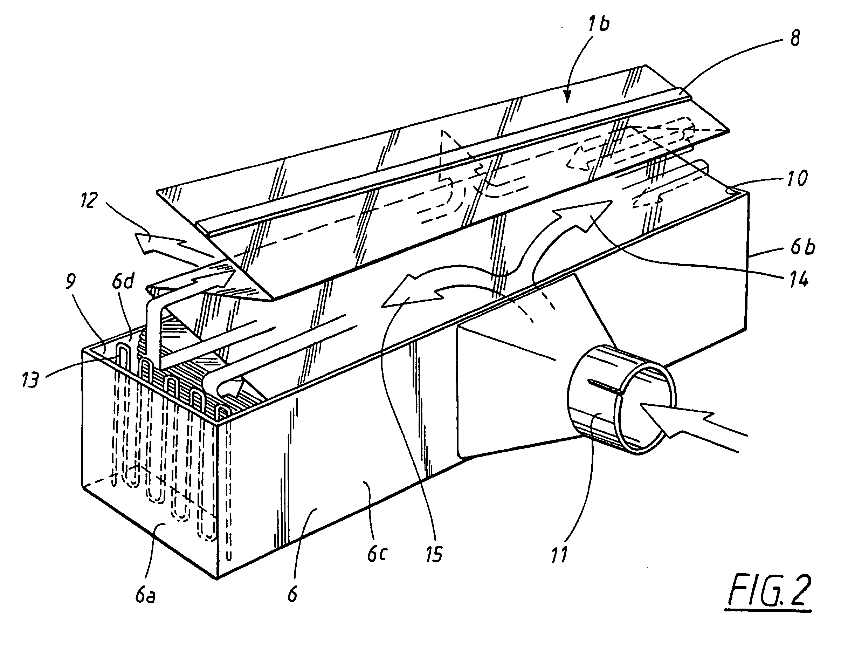

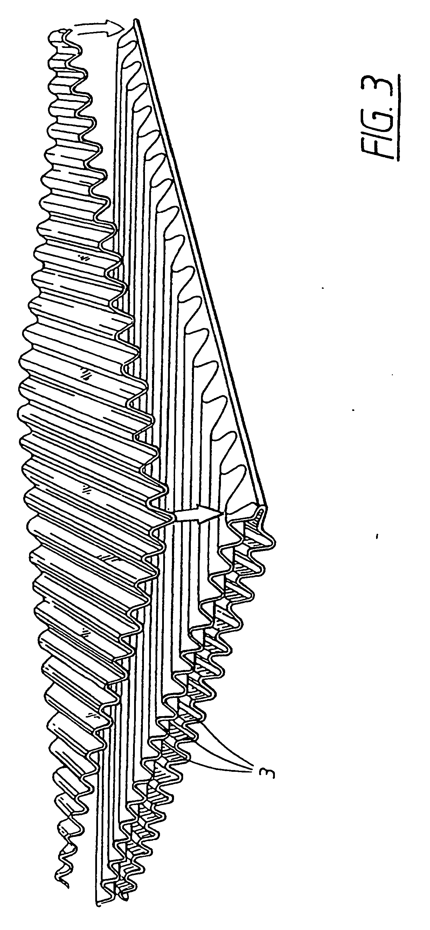

Figs. 1 and 2 show one embodiment of the present invention. A carrier material in the form of a long metal strip 1a is shaped by pressing, rolling, or similar process to create corrugations which run at an angle across a longitudinal axis of the strip 1a. The strip 1a is then repeatedly folded onto itself in zigzag form so that it forms a bundle 1b. Normally, the fold lines will be transverse to the corrugations. In this manner, the corrugations of adjacent layers are arranged crosswise to one another and thereby serve as spacers and form gas flow channels 3 between the folded layers of strip 1a. This relationship may be best appreciated in Fig. 3. The flow patterns in these channels 3 are such that gas flowing through the channels 3 will be continuously mixed, thus achieving good contact with the channel walls.

As illustrated in Fig. 1, to facilitate folding of the strip, the corrugations 2 can be discontinued at regular intervals, leaving narrow, corrugation-free folding areas 4 and 5. In addition, alternately directed folding notches may be arranged at the folding areas 4, 5 in order to facilitate pleating of the metal strip 1a.

The strip 1a is coated with catalyst material and an adsorption/desorption agent and is enclosed in a heat-insulated outer container 6. As illustrated, the outer container has a rectangular shape with two end walls 6a, 6b, two side walls 6c, 6d, a bottom wall 6e and a top wall 6f. The strip bundle 1b is sealed on the two sides 7, 8 which are arranged to be parallel to a gas flow through the strip bundle 1b. The ends of the bundle 1b, however, are not sealed, but instead end in reversing chambers 9,10 as is shown in Fig. 2. For illustration purposes, reversing chambers 9, 10 appear in the drawings as fairly large spaces at the ends of the carrier strip bundle 1b. In reality, however the distance from each end of the strip bundle to the corresponding end wall 6a, 6b of the outer container 6 can be very small; that is on the order of 1 millimeter or less.

Moreover, the outer container 6 has an inlet which is equipped with an attachment 11 for connecting incoming gas and an outlet which is equipped with another attachment 12 for connecting outgoing gas. Due to the way the strip is folded, connection to all channels on one side of the bundle 1b can readily be made, so that the two attachments 11 and 12 each connect to one side of the strip. In the embodiment of Fig. 2, however, the inlet and the outlet are placed directly opposite each other on either side wall. The inlet 11 and the outlet 12 are centrally arranged on the side walls 6c,6d of the outer container 6, which means that the inlet 11 and the outlet 12 are positioned at an equal distance from each end walls 6a,6b of the container.

An optional heating element 13 is shown to be located in each reversing chamber 9,10. In the illustrated design, the heating element consists of electric heating coils but other heating devices can also be used, such as gas or oil burners. As an alternative, the reversing chamber and the treated gas stream can be heated by supplying warm air or gas from an external source.

Operation of the unit will now be described below with reference to Fig. 2. Before the unit is started up or begins use, the reversing chambers 9,10 may be heated by heating element 13 to a temperature that is just above the temperature which is needed for the catalytic reaction. The temperature in the reversing chambers is subsequently maintained at this temperature by regulating the heat that is supplied by heating element 13 or by the heat that is generated from the chemical reactions during operation of the unit.

Gas containing impurities is supplied through intake attachment 11 and is divided into two half-flows 14, 15 which flow in opposite directions through the flow channels on the inlet side of bundle 1b towards reversing chambers 9, 10. If the supplied gas is an exhaust gas from, for instance, a vehicle engine, it will initially be cold upon start-up. During the cold start period, the temperature of the supplied gas is low so that impurities will almost immediately be trapped by the adsorption/desorption agent wall coatings. When the temperature of the incoming gas reaches the desorption temperature for the adsorption/desorption agent, however, the impurities will be released again to the flow of gas.

Since, during the initial period of operation of the unit, the catalytic reaction has not yet started, and the outgoing flow does not transfer a sufficient amount of heat to the incoming gas, the temperature of the incoming gas will decrease as the gas travels towards the reversing chambers 9,10. This implies that the released impurities will again be adsorbed further downstream in the unit. However, eventually all of the carrier body of the purification device will be heated and the released impurities will thus be brought into reactive contact with the catalyst.

In a preferred embodiment, the desorption temperature of the adsorption/desorption agent is at least as high as the ignition temperature of the catalyst. In this manner, impurities will remain trapped until the temperature is sufficiently high to immediately obtain a catalytic reaction thereby resulting in a high degree of purification and low emissions during the cold-start period. Good results, however, are also obtained when the desorption temperature of the adsorption/desorption agent is lower than the ignition temperature of the catalyst. In such a case, the impurities are desorbed at a first location in the unit and then transported downstream in the unit to a second location where the temperature is high enough to enable a catalytic reaction.

When the unit has reached its operational state, cold gas flows in the flow channels on the inlet side of the strip bundle 1b, toward reversing chambers 9,10; warmed gas flows counter thereto out toward outlet attachment 12 on the outlet side of the bundle 1b. The result is that heat is continuously transferred from the outgoing gas flow to the incoming gas flow. Accordingly, gas passing through the device is heated successively to the temperature of the reversing chambers 9,10. Thereafter, the temperature is reduced successively after it has left the reversing chambers 9,10.

By providing good heat exchange between the outgoing and incoming gas flows, the local temperatures of these flows are caused to be close to each other. Consequently, it is not normally necessary to supply additional heat to the reversing chambers 9,10 to support the catalytic reactions during operation of the purification unit. In this way operation of the unit is made extremely economical. However, for some applications, for instance when the temperature of the incoming gas is very low, or when treating lean gas mixtures, the heat which is produced by the catalytic reactions may not be sufficient to heat the incoming gas flow to the catalyst's reaction temperature. Under such circumstances, the heating element 13 may be used to provide the additional heat which is needed.

At the same time that the gas flow is being heated to the desired temperature in the unit, it is also moving over the catalyst-coated surface which is basically at the same temperature. Moreover, due to the corrugations 3 in the strip 1b, the flow passes over the catalyst surface along tortuous flow paths that result in constant mixing in a cross-sectional direction of the flow channels so that the gas is brought into repeated close contact with the catalyst. This creates favorable conditions for the reaction and, accordingly, the purification unit provides a high degree of purification.

When much heat is developed by the reaction in the device, for example due to a high concentration of substance undergoing oxidation, no additional heat need be supplied in the reversing chambers 9,10. At the same time, the temperature in the reversing chambers 9,10 is dependent, to a certain extent, on the concentration of the substance in the gas flow. This is particularly true when the carrier strip 1a is coated with catalyst only on the outlet side. In this case, heating of the incoming impure gas flow occurs without contact with the catalyst and the reaction occurs only after the flow has passed the reversing chambers 9,10.

Generation of a large quantity of heat then produces a high temperature in reversing chambers 9,10 and in the sections of the carrier strip bundle 1b adjacent to the reversing chambers 9,10. If the strip bundle 1b has a coating of catalyst on both sides, however, or at least on the inlet side of the bundle, the temperature in the reversing chambers 9,10 will be lower. In this case, the heating occurs under constant contact with the catalytic surface and the reaction takes place when the flow attains the proper temperature. The excess heat which is produced is constantly transferred to the outgoing gas flow on the outlet side of the bundle 1b. When everything that can react has been reacted, there is no additional temperature increase and the subsequent movement toward the reversing chambers 9,10 occurs with no additional temperature increase. In this way, the device is self-regulating in temperature and adjusts itself to a working temperature that is suitably just above the temperature at which the main reaction occurs. The temperature is somewhat higher at a high flow rate than at a low flow rate.

The catalyst and/or adsorption/desorption agent may be applied to the carrier walls in different concentrations at different areas along the flow path. For some applications, such as diesel engines, it is important that the catalytic reaction takes place principally in the vicinity of the reversing zones 9,10 in order to keep the temperature as high as possible. Accordingly, for such applications, the catalyst should be concentrated to these areas of the heat exchange catalyst carrier bundle 1b. Other applications may require the catalyst to be concentrated away from the reversing zones 9,10.

Thus, with high and variable contents of substances to be oxidized, it can be an advantage to have the inlet side of the carrier strip bundle coated with catalyst material. This protects the device from high temperatures that can harm the catalyst. Coating the outlet side then creates a reserve capacity and contributes to an increased degree of purification.

On the other hand, if the flow that is to be purified contains some substance that requires higher treatment temperatures than the main part of the impurities, it can be an advantage to coat only the outlet side of the carrier strip bundle 1b with catalyst material. Thereby, high temperatures can be achieved even with a readily reacting fuel. A similar effect can also be achieved using different catalysts on the two sides of the bundles, whereby the catalyst used for the heat-generating reaction is placed on the outlet side of the bundle 1b and the catalyst which is needed for the high-temperature reaction is placed on the inlet side of the bundle 1b.

The chemical reaction mainly takes place in the warm section of the carrier strip bundle 1b. The part of the bundle which is closest to the inlet and outlet attachments 11,12 is normally at a low temperature and, thus, is not catalytically active, but simply serves as a heat exchanger. Consequently, in order to save costly catalyst, it is possible to limit the catalytic coating to the parts of the carrier strip which are closest to the reversing chambers 9,10. With high contents of heat-generating impurities, however, this means that the temperature in the purification device can become high, just as in the case in which the coating is applied only on the outlet side of the strip.

The corrugations 3 in the carrier strip material are shown in Fig. 3. The corrugations are arranged at an acute angle to the longitudinal direction of extension of the unfolded carrier strip 1a. When the strip is folded onto itself, the corrugations in abutting layers run across each other as is indicated in Fig. 3. In the resulting strip bundle, if the gas flow passes the corrugations at a great angle, the flow resistance will be comparatively great and the heat transfer will be good. A small angle between the corrugations and the flow is preferred when a low flow resistance is desired. Accordingly, by carefully choosing the angle of the corrugations, it is possible to optimize the purification device for a particular application.

Hence, a low pressure drop can be achieved in a flow through a purification device in accordance with the invention if the corrugations or other three-dimensional structures are arranged in such a way that the angle against the direction of flow is small. As mentioned above, this normally results in a reduction of heat transfer to the walls. However, the reduction in heat transfer can be compensated with additional surface area. Depending on the circumstances, such a larger area may actually be desirable to make room for additional catalyst and additional adsorption/desorption material.

Accordingly, by providing a three-dimensional raised pattern on one or both surfaces of the carrier strip, a combined heat exchanger and catalytic reactor is obtained that has an active surface which is large within a limited volume. However, the angular corrugations which are described are not the only means to achieve a suitable spacing between the various layers in the bundle. Many other patterns with alternating protrusions and depressions can create the same results.

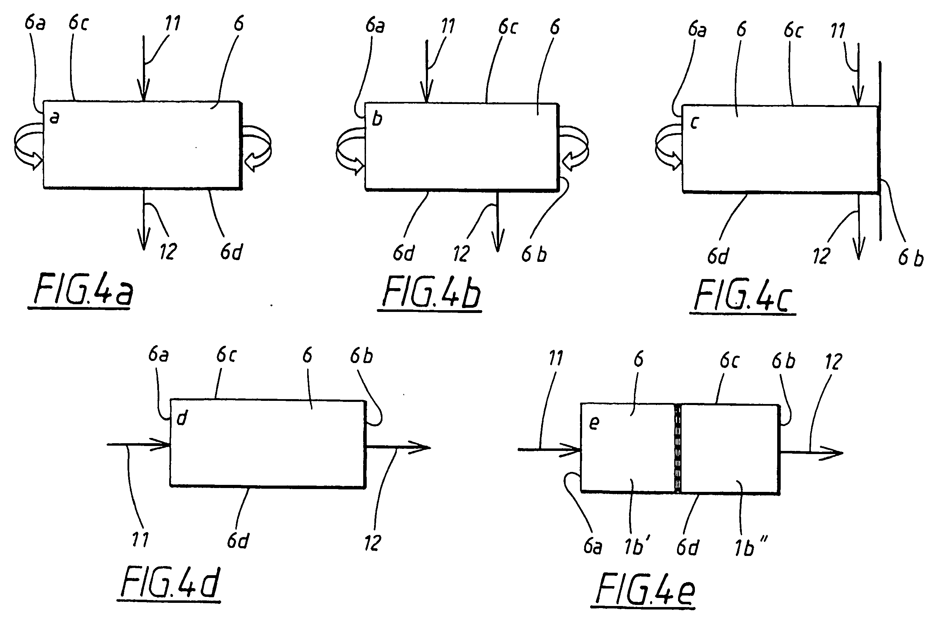

Figs. 4a-4e show different embodiments of a purification device in accordance with the present invention in which the inlet and the outlet are arranged at different locations on an outer container housing a heat exchange catalyst carrier body. The embodiments shown in Figs. 4a and 4c exhibit excellent purification characteristics during a cold-start period. The embodiments shown in Figs. 4d and 4e have a low ability of removing impurities during cold-start periods and the embodiment shown in Fig. 4b has an intermediate purification capacity.

The device in Fig. 4a has gas flow inlet and outlet connections 11,12 arranged on opposite sides of the outer container 6 on the longitudinal side walls 6c,6d thereof and at a distance from each container end 6a,6b which corresponds to half the distance between the ends. Such an arrangement of the inlet/outlet connections 11,12 may be appreciated in Figs. 1 and 2. An advantage to having the inlet and outlet connections 11,12 centrally arranged on the outer container 6 is that flow resistance in the purification device is minimized. Moreover, when compared to an embodiment having the inlet/outlet connections arranged at one end of the purification device, a further advantage is that there is no need to seal off the inlet and outlet ends of the heat exchange catalyst carrier body.

The device in Fig. 4b has the inlet connection 11 displaced towards a first end 6a of the outer container 6 and the outlet connection 12 displaced towards the second end 6b of the outer container. The inlet and outlet connections are symmetrically arranged on the side walls 6c, 6d of the outer container 6. Such an arrangement offers a relatively low pressure resistance in the device and, at the same time, exhibits fairly good heat exchange properties.

In Fig. 4c, the inlet and outlet connections 11,12 are arranged at one end 6b of the outer container 6, implying good heat exchange, but a high pressure resistance. In this embodiment, the heat exchange catalyst carrier body has to be sealed at the inlet and outlet end 6b.

Fig. 4d shows a device having the inlet connection 11 at one end 6a thereof and the outlet connection 12 at the opposite end 6b. Such a device provides excellent mixing of a treated gas flow, and is a catalytic reactor without heat exchange capacity.

The purification device in Fig. 4e has a heat exchange catalyst carrier body which is made up of two serially arranged parts 1b', 1b", which are rotated 90° in relation to each other around a longitudinal axis through the device. As in the device in Fig. 4d, the inlet and outlet connections 11,12 are arranged at opposing transverse ends 6a,6b of the device. Accordingly, a gas flow through the device runs in only one main direction. When compared to the device in Fig. 4d, the device in Fig. 4e offers further improved mixing of a treated gas flow.

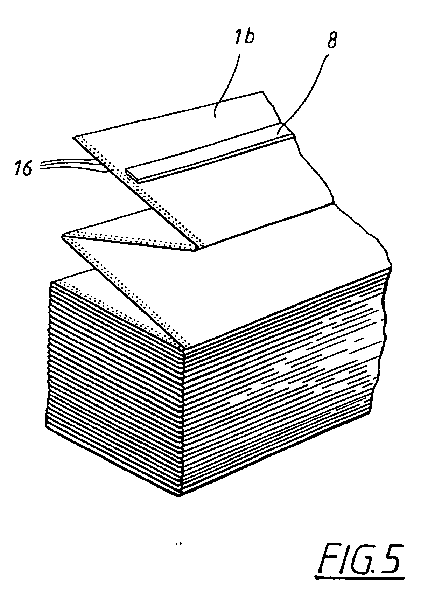

Fig. 5 illustrates an alternative way of creating a reversing space at an end of a carrier strip bundle 1b. The carrier strip is provided with perforations 16 which permit passage of a reversing gas flow. A carrier strip bundle such as shown in Fig. 5 can be closely fitted inside an outer container without any space between the container end walls and the ends of the carrier strip bundle.

A heat exchange catalyst carrier body for use in a purification device in accordance with the present Invention may have any suitable shape other than the rectangular shape which has been described herein. Accordingly, heat exchange catalyst carrier bodies having cylindrical, oval, hexagonal, triangular or other cross-sections can be used.

A catalytic purification device for gas flows and its components has been described herein. These and other variations, which will be appreciated by those skilled in the art, are within the intended scope of this invention as claimed below. As previously stated, detailed embodiments of the present invention are disclosed herein; however, it is to be understood that the disclosed embodiments are merely exemplary of the invention that may be embodied in various forms.

INDUSTRIAL APPLICABILITY: The present invention finds applicability in the emission control industries.

## Claims

1. A device for catalytic treatment of a gas flow, said device comprising:
a heat exchange catalyst carrier body (1b) having an inlet face and an outlet face, said Inlet face being distinct from said outlet face;
said carrier body (1b) having carrier walls that define a plurality of gas flow passages (3), said plurality of gas flow passages including a set of inlet channels extending from said inlet face and a set of outlet channels extending from said outlet face, wherein said carrier walls separate said Inlet channels from said outlet channels;
a reversing chamber (9,10) allowing the gas flow to transfer from said inlet channels to said outlet channels whereby said carrier walls allow heat exchange between said inlet channels and said outlet channels in a counter current heat exchange process;
a catalyst material applied to said carrier walls and exposed to said gas flow passages (3),
a casing enclosing (6) said carrier body and having an Inlet for supplying a gas flow to said inlet face of said carrier body and an outlet for discharging said gas flow from said outlet face of said carrier body, and an impurity-absorbing/desorbing agent applied to said carrier walls and exposed to said gas flow passages (3), said impurity-adsorbing/desorbing agent being adapted to adsorb impurities at a first temperature and desorb those impurities at a second temperature, said first temperature being lower than said second temperature, wherein the heat exchange catalyst carrier body (1b) is arranged to, during cold start conditions, transfer heat from said inlet channels to said outlet channels, whereby the impurities are desorbed at a first location in the unit and then transported downstream in the unit to a second location where the temperature is high enough to enable a catalytic reaction, **characterised in that** the device further includes: a carrier strip (1a) configured to form said carrier walls, said carrier strip (1a) having a first three-dimensionally patterned surface and a second three-dimensionally pattemed surface, said carrier strip being multiply folded onto itself into a strip bundle; and
said first three-dimensionally patterned surface establishing a carrier wall of said inlet face of said carrier body and said second three-dimensionally patterned surface establishing a carrier wall of said outlet face of said carrier body.

2. The device for catalytic treatment of a gas flow as recited in claim 1, wherein said carrier strip (1a) is folded into a strip bundle (1b) having a substantially rectangular cross-section.

3. The device for catalytic treatment of a gas flow as recited in claim 1, wherein said carrier strip (1a) is provided with a pattern of generally parallel corrugations arranged at an angle in relation to a main direction of extension of said carrier strip.

4. The device for catalytic treatment of a gas flow as recited in claim 1, further comprising:
said casing (6) having a first end and a second end, a casing wall (6a,6b) being arranged at each of said first and second ends of said casing, said casing walls extending substantially perpendicularly to said main direction of said gas flow passages; and
said carrier body terminating at a distance from at least one of said casing walls so as to form said reversing chamber (9,10) positioned between said at least one casing wall and said carrier body.

5. The device for catalytic treatment of a gas flow as recited in claim 4, further comprising:
a heating element (13) positioned at said reversing chamber.

6. The device for catalytic treatment of a gas flow as recited in claim 1, further comprising:
said casing (6) having a first end and a second end, a casing wall (6a,6b) being arranged at each of said first and second ends of said casing, said casing walls extending substantially perpendicularly to said main direction of said gas flow passages; and
said carrier body being provided with perforations (16) in said carrier walls in an immediate vicinity of at least one of said casing walls, said perforations forming said reversing chamber (9,10).

7. The device for catalytic treatment of a gas flow as recited in claim 1, wherein said catalyst material is applied to said carrier walls as a macroscopically homogeneous coating.

8. The device for catalytic treatment of a gas flow as recited in claim 7, wherein said impurity-adsorbing/desorbing agent is applied to said carrier walls as a macroscopically homogeneous coating.

9. The device for catalytic treatment of a gas flow as recited in claim 1, wherein said catalyst material and said impurity-adsorbing/desorbing agent are applied to said carrier walls as intermittent coatings thereby forming eas of catalyst coating alternating with areas coated with impurity-adsorbing/desorbing agent

10. The device for catalytic treatment of a gas flow as recited In claim 1, wherein said carrier body and said casing (6) have a generally elongate shape with a longitudinal direction and a transverse direction, said casing having two end walls extending generally in the transverse direction and side walls (6c, 6d) connecting said end walls and extending generally in the longitudinal direction.

11. The device for catalytic treatment of a gas flow as recited in claim 10, wherein said inlet (11) and said outlet (12) are arranged in said side walls.

12. The device for catalytic treatment of a gas flow as recited in claim 11, wherein said inlet (11) and said outlet (12) are arranged generally opposite each other and at a distance from each casing end corresponding to approximately half the distance between said casing ends.

13. The device for catalytic treatment of a gas flow as recited in claim 1, wherein said carrier body comprises a metal carrier material.

14. The device for catalytic treatment of a gas flow as recited in claim 1, wherein said carrier body comprises a ceramic carrier material.

15. The device for catalytic treatment of a gas flow as recited in claim 1, wherein said impuirty-adsorbing/desorbing agent is adapted to adsorb and desorb hydrocarbon compounds.

16. The device for catalytic treatment of a gas flow as recited in claim 1 or 15, wherein said impuirty-adsorbing/desorbing agent is adapted to adsorb and desorb nitrogen oxides.

17. The device for catalytic treatment of a gas flow as recited in claim 1, wherein said carrier body is made of two along a longitudinal axis serially arranged parts (1b', 1b"), each part being rotated approximately 90° to the other part about a longitudinal axis of said device.

18. The device for catalytic treatment of a gas flow as recited in claim 1, wherein said carrier walls exhibit different catalyst concentrations in different areas along said gas flow passages.

19. The device for catalytic treatment of a gas flow as recited in claim 1, wherein said carrier walls exhibit different concentrations of said impurity-adsorbing/desorbing agent in different areas along said gas flow passages.

20. A method for reducing emissions during a cold start period in a device for catalytic treatment of a gas flow, according to the claims 1 to 19.

## Patentansprüche

1. Vorrichtung zum katalytischen Behandeln eines Gasstroms mit:
einem Wärmetauscher-Katalysator-Trägerkörper (1b) mit einer Einlassfläche und einer Auslassfläche, wobei die Einlassfläche von der Auslassfläche verschieden ist;
wobei der Trägerkörper (1b) Trägerwände aufweist, die eine Vielzahl von Gasstromdurchlässen (3) bilden, wobei die Vielzahl von Gasstromdurchlässen einen Satz von Einlasskanälen, die sich von der Einlassfläche aus erstrecken, und einen Satz von Auslasskanälen enthält, die sich von der Auslassfläche aus erstrecken, wobei die Trägerwände die Einlasskanäle von den Auslasskanälen trennen;
einer Umkehrkammer (9, 10), die dem Gasstrom einen Übergang von den Einlasskanälen zu den Auslasskanälen ermöglicht, wobei die Trägerwände einen Wärmeaustausch zwischen den Einlasskanälen und den Auslasskanälen in einem Gegenstromwärmetauschprozess ermöglichen;
einem Katalysatorwerkstoff, der auf die Trägerwände aufgebracht und den Gasstromdurchlässen (3) zugewandt ist; und
einem Gehäuse (6), das den Trägerkörper umschließt und einen Einlass zum Zuführen eines Gasstroms zur Einlassfläche des Trägerkörpers und einen Auslass zum Ausstoßen des Gasstroms von der Auslassfläche des Trägerkörpers und ein Verunreinigungen adsorbierendes/desorbierendes Agens aufweist, das auf die Trägerwände aufgebracht und den Gasstromdurchlässen (3) zugewandt ist, wobei das adsorbierende/desorbierende Agens darauf abgestimmt ist, Verunreinigungen bei einer ersten Temperatur zu adsorbieren und diese Verunreinigungen bei einer zweiten Temperatur zu desorbieren, die erste Temperatur niedriger als die zweite Temperatur ist, wobei der Wärmetauscher-Katalysator-Trägerkörper (1b) so ausgestaltet ist, dass während Kaltstartbedingungen Wärme von den Einlasskanälen zu den Auslasskanälen übertragen wird, wodurch die Verunreinigungen an einer ersten Stelle in der Vorrichtung desorbiert werden und dann in der Vorrichtung stromab zu einer zweiten Stelle gefördert werden, wo die Temperatur hoch genug ist, um eine katalytische Reaktion zu ermöglichen;
**dadurch gekennzeichnet, dass** die Vorrichtung ferner Folgendes aufweist:
ein Trägerband (1a), das so gestaltet ist, dass es die Trägerwände bildet, wobei das Trägerband (1a) eine erste dreidimensional geformte Oberfläche und eine zweite dreidimensional geformte Oberfläche aufweist und das Trägerband mehrfach auf sich selbst zu einem Bandpaket gefaltet ist; und
wobei die erste dreidimensional geformte Oberfläche eine Trägerwand der Einlassfläche des Trägerkörpers bildet und die zweite dreidimensional geformte Oberfläche eine Trägerwand der Auslassfläche des Trägerkörpers bildet.

2. Vorrichtung zum katalytischen Behandeln eines Gasstroms nach Anspruch 1, wobei das Trägerband (1a) zu einem Bandpaket (1b) gefaltet ist, das einen im Wesentlichen rechteckigen Querschnitt aufweist.

3. Vorrichtung zum katalytischen Behandeln eines Gasstroms nach Anspruch 1, wobei das Trägerband (1a) mit einem Muster im Allgemeinen paralleler Riffelungen versehen ist, die unter einem Winkel in Bezug auf die Hauptrichtung der Erstreckung des Trägerbandes angeordnet sind.

4. Vorrichtung zum katalytischen Behandeln eines Gasstroms nach Anspruch 1, wobei ferner:
das Gehäuse (6) ein erstes und ein zweites Ende aufweist, eine Gehäusewand (6a ,6b) an jedem der ersten und zweiten Enden des Gehäuses angeordnet ist, sich die Gehäusewände im Wesentlichen senkrecht zur Hauptrichtung der Gasstromdurchlässe erstrecken; und
der Trägerkörper in einem Abstand von mindestens einer der Gehäusewände endet, um eine Umkehrkammer (9, 10) zu bilden, die zwischen der mindestens einen Gehäusewand und dem Trägerkörper angeordnet ist.

5. Vorrichtung zum katalytischen Behandeln eines Gasstroms nach Anspruch 4, die ferner:
ein Heizelement (13) aufweist, das in der Umkehrkammer angeordnet ist.

6. Vorrichtung zum katalytischen Behandeln eines Gasstroms nach Anspruch 1, wobei ferner:
das Gehäuse (6) ein erstes und ein zweites Ende aufweist, eine Gehäusewand (6a ,6b) an jedem der ersten und zweiten Enden des Gehäuses angeordnet ist, sich die Gehäusewände im Wesentlichen senkrecht zur Hauptrichtung der Gasstromdurchlässe erstrecken; und
der Trägerkörper mit Lochungen (16) in den Trägerwänden in unmittelbarer Nähe von mindestens einer der Gehäusewände versehen ist, wobei die Lochungen die Umkehrkammer (9, 10) bilden.

7. Vorrichtung zum katalytischen Behandeln eines Gasstroms nach Anspruch 1, wobei der Katalysatorwerkstoff auf die Trägerwände als makroskopisch homogene Schicht aufgebracht ist.

8. Vorrichtung zum katalytischen Behandeln eines Gasstroms nach Anspruch 7, 9, 10 wobei das Verunreinigungen adsorbierende/desorbierende Agens auf die Trägerwände als makroskopisch homogene Schicht aufgebracht ist.

9. Vorrichtung zum katalytischen Behandeln eines Gasstroms nach Anspruch 1, wobei der Katalysatorwerkstoff und das Verunreinigungen adsorbierende/desorbierende Agens auf die Trägerwände als intermittierende Schichten aufgebracht sind, wodurch Bereiche der Katalysatorbeschichtung gebildet werden, die mit Bereichen abwechseln, die mit dem Verunreinigungen adsorbierenden/desorbierenden Agens beschichtet sind.

10. Vorrichtung zum katalytischen Behandeln eines Gasstroms nach Anspruch 1, wobei der Trägerkörper und das Gehäuse (6) eine im Allgemeinen längliche Form mit einer Längsrichtung und einer Querrichtung aufweisen, das Gehäuse zwei Endwände, die sich im Allgemeinen in der Querrichtung erstrecken, und Seitenwände (6c, 6d) aufweist, welche die Endwände verbinden und sich im Allgemeinen in der Längsrichtung erstrecken.

11. Vorrichtung zum katalytischen Behandeln eines Gasstroms nach Anspruch 10, wobei der Einlass (11) und der Auslass (12) in den Seitenwänden angeordnet sind.

12. Vorrichtung zum katalytischen Behandeln eines Gasstroms nach Anspruch 11, wobei der Einlass (11) und der Auslass (12) im Allgemeinen einander gegenüberliegend und in einer Entfernung von den Gehäuseenden angeordnet sind, die ungefähr der halben Entfernung zwischen den Gehäuseenden entspricht.

13. Vorrichtung zum katalytischen Behandeln eines Gasstroms nach Anspruch 1, wobei der Trägerkörper einen metallischen Trägerwerkstoff aufweist.

14. Vorrichtung zum katalytischen Behandeln eines Gasstroms nach Anspruch 1, wobei der Trägerkörper einen keramischen Trägerwerkstoff aufweist.

15. Vorrichtung zum katalytischen Behandeln eines Gasstroms nach Anspruch 1, wobei das Verunreinigungen adsorbierende/desorbierende Agens zum Adsorbieren und Desorbieren von Kohlenwasserstoffverbindungen geeignet ist.

16. Vorrichtung zum katalytischen Behandeln eines Gasstroms nach Anspruch 1 oder 15, wobei das Verunreinigungen adsorbierende/desorbierende Agens zum Adsorbieren und Desorbieren von Stickoxiden geeignet ist.

17. Vorrichtung zum katalytischen Behandeln eines Gasstroms nach Anspruch 1, wobei der Trägerkörper aus zwei entlang der Längsachse in Reihe angeordneten Teilen (1b', 1b") gefertigt ist und jeder Teil um eine Längsachse der Vorrichtung um ungefähr 90° zum anderen Teil gedreht ist.

18. Vorrichtung zum katalytischen Behandeln eines Gasstroms nach Anspruch 1, wobei die Trägerwände unterschiedliche Katalysatorkonzentrationen in unterschiedlichen Bereichen entlang der Gasstromdurchlässe aufweisen.

19. Vorrichtung zum katalytischen Behandeln eines Gasstroms nach Anspruch 1, wobei die Trägerwände unterschiedliche Konzentrationen des Verunreinigungen adsorbierenden/desorbierenden Agens in unterschiedlichen Bereichen entlang der Gasstromdurchlässe aufweisen.

20. Verfahren zum Reduzieren von Emissionen während einer Kaltstartdauer in einer Vorrichtung zum katalytischen Behandeln eines Gasstroms gemäß den Ansprüchen 1 bis 19.

## Revendications

1. Dispositif de traitement catalytique d'un flux gazeux, ledit dispositif comportant :
un corps de support de catalyseur à échange thermique (1b) ayant une face d'entrée et une face de sortie, ladite face d'entrée étant distincte de ladite face de sortie,
ledit corps de support (1b) ayant des parois de support qui définissent une pluralité de passages de flux gazeux (3), ladite pluralité de passages de flux gazeux incluant un ensemble de canaux d'entrée s'étendant depuis ladite face d'entrée et un ensemble de canaux de sortie s'étendant depuis ladite face de sortie, lesdites parois de support séparant lesdits canaux d'entrée desdits canaux de sortie,
une chambre d'inversion (9, 10) pour permettre au flux gazeux de passer desdits canaux d'entrée dans lesdits canaux de sortie de sorte que lesdites parois de support permettent un échange thermique entre lesdits canaux d'entrée et lesdits canaux de sortie dans un processus d'échange thermique à contre-courant,
un matériau catalytique appliqué auxdites parois de support et exposé auxdits passages de flux gazeux (3),
un carter (6) enfermant ledit corps de support et ayant une entrée pour alimenter un flux gazeux dans ladite face d'entrée dudit corps de support et une sortie pour décharger ledit flux gazeux depuis ladite face de sortie dudit corps de support, et un agent d'absorption/désorption d'impuretés appliqué auxdites parois de support et exposé auxdits passages de flux gazeux (3), ledit agent d'adsorption/désorption d'impuretés étant adapté pour adsorber des impuretés à une première température et désorber ces impuretés à une seconde température, ladite première température étant inférieure à ladite seconde température, le corps de support de catalyseur à échange thermique (1b) étant conçu pour, pendant des conditions de départ à froid, transférer de la chaleur depuis lesdits canaux d'entrée dans lesdits canaux de sortie, de sorte que les impuretés sont désorbées à un premier emplacement dans l'unité et ensuite transportées en aval dans l'unité jusqu'à un second emplacement où la température est suffisamment élevée pour permettre une réaction catalytique, **caractérisé en ce que** le dispositif comporte de plus : une bande de support (1a) configurée pour former lesdites parois de support, ladite bande de support (1a) ayant une première surface mise en forme de manière tridimensionnelle et une seconde surface mise en forme de manière tridimensionnelle, ladite bande de support étant repliée de manière multiple sur elle-même en un faisceau de bandes, et
ladite première surface mise en forme de manière tridimensionnelle établissant une paroi de support de ladite face d'entrée dudit corps de support et ladite seconde surface mise en forme de manière tridimensionnelle établissant une paroi de support de ladite face dudit corps de support.

2. Dispositif de traitement catalytique d'un flux gazeux selon la revendication 1, dans lequel ladite bande de support (1a) est repliée en un faisceau de bandes (1b) ayant une coupe transversale essentiellement rectangulaire.

3. Dispositif de traitement catalytique d'un flux gazeux selon la revendication 1, dans lequel ladite bande de support (1a) est munie d'un motif ayant des ondulations généralement parallèles agencées à un angle par rapport à une direction principale d'extension de ladite bande de support.

4. Dispositif de traitement catalytique d'un flux gazeux selon la revendication 1, comportant de plus :
ledit carter (6) ayant une première extrémité et une seconde extrémité, une paroi de carter (6a, 6b) étant agencée au niveau de chacune desdites première et seconde extrémités dudit carter, lesdites parois de carter s'étendant essentiellement perpendiculairement à ladite direction principale desdits passages de flux gazeux, et
ledit corps de support se terminant à une distance par rapport à au moins une desdites parois de carter de manière à former ladite chambre d'inversion (9, 10) positionnée entre ladite au moins une paroi de carter et ledit corps de support.

5. Dispositif de traitement catalytique d'un flux gazeux selon la revendication 4, comportant de plus :
un élément de chauffage (13) positionné au niveau de ladite chambre d'inversion.

6. Dispositif de traitement catalytique d'un flux gazeux selon la revendication 1, comportant de plus :
ledit carter (6) ayant une première extrémité et une seconde extrémité, une paroi de carter (6a, 6b) étant agencée au niveau de chacune desdites première et seconde extrémités dudit carter, lesdites parois de carter s'étendant essentiellement perpendiculairement à ladite direction principale desdits passages de flux gazeux, et
ledit corps de support étant muni de perforations (16) dans lesdites parois de support à proximité immédiate d'au moins desdites parois de carter, lesdites perforations formant ladite chambre d'inversion (9, 10).

7. Dispositif de traitement catalytique d'un flux gazeux selon la revendication 1, dans lequel ledit matériau catalytique est appliqué auxdites parois de support sous forme d'un revêtement macroscopiquement homogène.

8. Dispositif de traitement catalytique d'un flux gazeux selon les revendications 7, 9, 10, dans lequel ledit agent d'adsorption/désorption d'impuretés est appliqué auxdites parois de support sous forme d'un revêtement macroscopiquement homogène.

9. Dispositif de traitement catalytique d'un flux gazeux selon la revendication 1, dans lequel ledit matériau catalytique et ledit agent d'adsorption/désorption d'impuretés sont appliqués auxdites parois de support sous forme de revêtements intermittents de manière à former des zones de revêtement catalytique alternant avec des zones revêtues d'un agent d'adsorption/désorption d'impuretés.

10. Dispositif de traitement catalytique d'un flux gazeux selon la revendication 1, dans lequel ledit corps de support et ledit carter (6) ont une forme généralement allongée ayant une direction longitudinale et une direction transversale, ledit carter ayant deux parois d'extrémité s'étendant généralement dans la direction transversale et des parois latérales (6c, 6d) reliant lesdites parois d'extrémité et s'étendant généralement dans la direction longitudinale.

11. Dispositif de traitement catalytique d'un flux gazeux selon la revendication 10, dans lequel ladite entrée (11) et ladite sortie (12) sont agencées dans lesdites parois latérales.

12. Dispositif de traitement catalytique d'un flux gazeux selon la revendication 11, dans lequel ladite entrée (11) et ladite sortie (12) sont agencées généralement en vis-à-vis l'une de l'autre à une distance par rapport à chaque extrémité de carter correspondant approximativement à la moitié de la distance entre lesdites extrémités de carter.

13. Dispositif de traitement catalytique d'un flux gazeux selon la revendication 1, dans lequel ledit corps de support comporte un matériau de support métallique.

14. Dispositif de traitement catalytique d'un flux gazeux selon la revendication 1, dans lequel ledit corps de support comporte un matériau de support en céramique.

15. Dispositif de traitement catalytique d'un flux gazeux selon la revendication 1, dans lequel ledit agent d'adsorption/désorption d'impuretés est adapté pour adsorber et désorber des composés hydrocarbures.

16. Dispositif de traitement catalytique d'un flux gazeux selon la revendication 1 ou 15, dans lequel ledit agent d'adsorption/désorption d'impuretés est adapté pour adsorber et désorber des oxydes d'azote.

17. Dispositif de traitement catalytique d'un flux gazeux selon la revendication 1, dans lequel ledit corps de support est constitué de deux parties (1b', 1b") agencées en série le long d'un axe longitudinal, chaque partie étant tournée d'approximativement 90° par rapport à l'autre autour d'un axe longitudinal dudit dispositif.

18. Dispositif de traitement catalytique d'un flux gazeux selon la revendication 1, dans lequel lesdites parois de support affichent des concentrations en catalyseur différentes dans différentes zones le long desdits passages de flux gazeux.

19. Dispositif de traitement catalytique d'un flux gazeux selon la revendication 1, dans lequel lesdites parois de support affichent des concentrations différentes dudit agent d'adsorption/désorption d'impuretés dans des zones différentes le long desdits passages de flux gazeux.

20. Méthode de reduction d'emissions pendant des conditions de départ à froid dans un dispositif de traitement catalytique d'un flux gazeux selon les revendications 1 - 19.
